# EUROPEAN PATENT APPLICATION

(11) **EP 4 693 030 A1**
(43) Date of publication of application: **11.02.2026**
(21) Application number: 25187327.9
(22) Date of filing: 03.07.2025
(51) Int. Cl.: G06F 9/38, G06F 9/30, G06F 9/46, G06F 9/48

(54) **INSTRUCTION EXECUTION APPARATUS AND METHOD, ELECTRONIC DEVICE, AND STORAGE MEDIUM**

(30) Priority: 07.08.2024 CN 202411081788
(71) Applicant: KunlunXin Technology (Beijing) Company Limited, Haidian District Beijing 100101 (CN)
(72) Inventor: LI, Bowen, Beijing, 100101 (CN); MA, Bo, Beijing, 100101 (CN); XU, Yingnan, Beijing, 100101 (CN); BAO, Hexin, Beijing, 100101 (CN)
(74) Representative: Nederlandsch Octrooibureau

(57) **Abstract**

The present disclosure provides an instruction execution apparatus, which relates to a field of artificial intelligence technology, and in particular to a field of chip technology and a field of Single Instruction Multiple Data technology. A specific implementation solution includes: a dispatch unit configured to, in response to determining that at least one source register for an instruction to be executed corresponds to at least one of a plurality of uniform registers, dispatch the instruction to be executed as a uniform instruction to a first computing unit, where the uniform instruction includes a plurality of uniform computation operations; and the first computing unit configured to execute the uniform computation operations to obtain a uniform computation result, where the uniform computation result is written into at least one available uniform register among the plurality of uniform registers. The present disclosure further provides an instruction execution method, an electronic device, and a storage medium.

## Description

### TECHNICAL FIELD

The present disclosure relates to a field of artificial intelligence technology, in particular to a field of chip technology and a field of Single Instruction Multiple Data (SIMD) technology. More specifically, the present disclosure provides an instruction execution apparatus and method, an electronic device, and a storage medium.

### BACKGROUND

With a development of artificial intelligence technology, application scenarios of artificial intelligence chips are continuously increasing. Artificial intelligence chips have strong parallel processing capabilities and may efficiently process a large amount of data.

### SUMMARY

The present disclosure provides an instruction execution apparatus and method, a device, and a storage medium.

According to an aspect of the present disclosure, an instruction execution apparatus is provided, including: a dispatch unit configured to, in response to determining that at least one source register for an instruction to be executed corresponds to at least one of a plurality of uniform registers, dispatch the instruction to be executed as a uniform instruction to a first computing unit, where the uniform instruction includes a plurality of uniform computation operations; and the first computing unit configured to execute the uniform computation operations to obtain a uniform computation result, where the uniform computation result is written into at least one available uniform register among the plurality of uniform registers.

According to another aspect of the present disclosure, an electronic device is provided, including the apparatus provided by the present disclosure.

According to another aspect of the present disclosure, an instruction execution method is provided, including: in response to determining that at least one source register for an instruction to be executed corresponds to at least one of a plurality of uniform registers, dispatching the instruction to be executed as a uniform instruction to a first computing unit, where the uniform instruction includes a plurality of uniform computation operations; and executing the uniform computation operations using the first computing unit to obtain a uniform computation result, where the uniform computation result is written into at least one available uniform register among the plurality of uniform registers.

According to another aspect of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to implement the method provided by the present disclosure.

According to another aspect of the present disclosure, a non-transitory computer-readable storage medium having computer instructions therein is provided, and the computer instructions are configured to cause a computer to implement the method provided by the present disclosure.

According to another aspect of the present disclosure, a computer program product containing a computer program is provided, where the computer program is configured to, when executed by a processor, cause the processor to implement the method provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure. In the accompanying drawings:
FIG. 1 shows a schematic block diagram of an instruction execution apparatus according to an embodiment of the present disclosure;
FIG. 2 shows a schematic diagram of a detection unit according to an embodiment of the present disclosure;
FIG. 3 shows a schematic diagram of updating register mapping data according to an embodiment of the present disclosure;
FIG. 4 shows a schematic diagram of an instruction execution apparatus according to an embodiment of the present disclosure;
FIG. 5 shows a schematic diagram of a plurality of computing units according to an embodiment of the present disclosure;
FIG. 6 shows a schematic block diagram of an electronic device according to an embodiment of the present disclosure;
FIG. 7 shows a flowchart of an instruction execution method according to an embodiment of the present disclosure; and
FIG. 8 shows a block diagram of an electronic device to which the instruction execution method may be applied according to an embodiment of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

An artificial intelligence chip may include a general-purpose graphics processing unit (GPGPU), a tensor processing unit (TPU), a neural network processing unit (NPU), and the like. Taking the general-purpose graphics processing unit as an example, it may execute instructions in Single Instruction Multiple Data manner to achieve high computation throughput and high energy efficiency. However, in a process of executing instructions in Single Instruction Multiple Data manner, there may be a significant amount of redundant computation. For example, different execution channels may execute the same computation operation according to the same data. Such a computation operation may be referred to as a uniform computation operation. For another example, an instruction to be executed may include a batch of computation operations, which may include sixteen computation operations, and the sixteen computation operations may involve sixteen different data in a first source register and sixteen different data in a second source register. In this case, the instruction to be executed may be a vector instruction, and the sixteen computation operations do not include redundant operations. For another example, if the sixteen computation operations all involve the same first data in the first source register and the same second data in the second source register, the sixteen computation operations may be identical, resulting in sixteen identical computation results. In this case, the instruction to be executed may be a uniform instruction, and the sixteen computation operations include redundant operations. Such redundant operations may lead to unnecessary consumption of computation resources, making it difficult to further improve chip performance.

In view of the above, in order to improve the chip performance, the present disclosure provides an instruction execution apparatus, which will be described below.

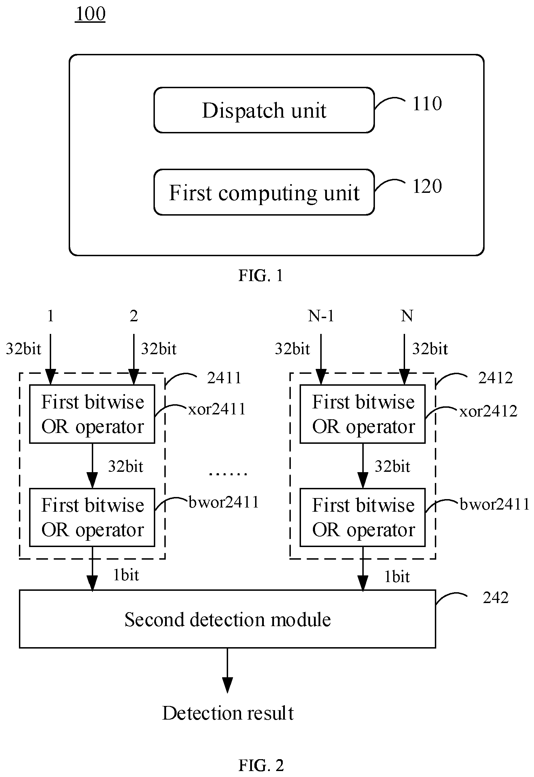

FIG. 1 shows a schematic block diagram of an instruction execution apparatus according to an embodiment of the present disclosure.

As shown in FIG. 1, an instruction execution apparatus 100 may include a dispatch unit 110 and a first computing unit 120.

The dispatch unit 110 may be configured to, in response to determining that at least one source register for an instruction to be executed corresponds to at least one of a plurality of uniform registers, dispatch the instruction to be executed as a uniform instruction to a target computing unit.

In an embodiment of the present disclosure, the apparatus 100 may include a storage space, and the storage space stores one or more correspondence relationships between first registers and uniform registers. If the source register for the instruction to be executed has the same register index as a first register in the storage space, it may be determined that the source register for the instruction to be executed corresponds to a uniform register.

In an embodiment of the present disclosure, the uniform register may be a newly added register or a scalar register. For example, a vector register may have a capacity of 512 bits, a scalar register may have a capacity of 32 bits, and a uniform register may have a capacity of 32 bits. The first register may be a vector register, and a scalar register may serve as a second register.

In an embodiment of the present disclosure, one or more source registers may be used for the instruction to be executed. If there is only one source register and it is determined that the source register corresponds to a uniform register, it may be determined that the instruction to be executed is a uniform instruction.

In an embodiment of the present disclosure, the uniform instruction may include a plurality of uniform computation operations. For example, the uniform instruction may include sixteen uniform computation operations.

In an embodiment of the present disclosure, the dispatch unit may dispatch at least one of a control signal and data to be processed for the instruction to be executed to the first computing unit.

The first computing unit 120 may be configured to execute the uniform computation operations to obtain a uniform computation result. For example, a target computing unit 120 may execute any of the sixteen uniform computation operations to obtain a uniform computation result.

In an embodiment of the present disclosure, the uniform computation result is written into at least one available uniform register among the plurality of uniform registers. For example, an idle uniform register among the plurality of uniform registers may serve as an available uniform register.

According to embodiments of the present disclosure, when the source register for the instruction corresponds to a uniform register, it is only needed to execute one of a plurality of operations in the instruction to obtain an execution result of the instruction, which may greatly reduce redundant operations, improve an execution efficiency of the instruction, and help improve the chip performance. In addition, the first computing unit may execute a small number of operations, and the uniform register has a small capacity, so that the chip performance may be significantly improved with a small chip area overhead.

It may be understood that the above description has explained the apparatus of the present disclosure. The one or more correspondence relationships in the above-mentioned storage space may be used as register mapping data, and the following will further describe the register mapping data.

In an embodiment of the present disclosure, the register mapping data may indicate the first register and the uniform register corresponding to the first register, and the register mapping data may include correspondence relationships between a plurality of first registers and a plurality of uniform registers. In a process of executing a plurality of instructions, the register mapping data may be updated continuously. At the beginning of executing instructions for different tasks using the chip, the register mapping data may be empty. For example, when executing a first instruction to be executed among a plurality of instructions to be executed, the register mapping data may be empty and include no correspondence relationship between the vector register and the uniform register.

It may be understood that the above description has explained the register mapping data of the present disclosure. The following will further describe the apparatus of the present disclosure.

In some embodiments, the apparatus may further include an instruction fetch unit, a decode unit, a scheduling unit, and an issue unit. The instruction fetch unit may acquire an initial instruction. The decode unit may decode the initial instruction to obtain an instruction to be executed. The scheduling unit may schedule hardware resources related to the instruction to be executed so as to execute the instruction to be executed. The issue unit may send a read request to one or more source registers for the instruction to be executed. The issue unit may issue the instruction to be executed to the dispatch unit. For example, the issue unit may issue the first instruction to be executed to the dispatch unit.

In some embodiments, the dispatch unit may be further configured to dispatch the instruction to be executed to a second computing unit in response to determining that the at least one source register for the instruction to be executed includes a first register that does not correspond to any uniform register. For example, when executing the first instruction to be executed, the register mapping data does not include any correspondence relationship between the vector register and the uniform register. The first instruction to be executed may be dispatched to the second computing unit, which may be a vector computing unit. In this case, the first instruction to be executed may be treated as a vector instruction. It may be understood that the second computing unit may also be a matrix computing unit, which is not limited in the present disclosure.

In some embodiments, the second computing unit may be configured to execute the plurality of computation operations of the instruction to be executed to obtain a plurality of initial computation results. For example, the second computing unit may execute the plurality of computation operations of the first instruction to be executed to obtain a plurality of initial computation results. Subsequently, it may be determined whether the plurality of initial computation results are identical.

In some embodiments, the apparatus may further include a detection unit, which will be described below with reference to FIG. 2.

FIG. 2 shows a schematic diagram of a detection unit according to an embodiment of the present disclosure.

As shown in FIG. 2, a detection unit 240 may include a plurality of first detection modules, which may include a first detection module 2411, ..., a first detection module 2412. The detection unit 240 may further include a second detection module 242. The detection unit 240 may determine whether N detection results are identical. N may be an integer greater than 1. For example, N may be 16.

In an embodiment of the present disclosure, the first detection module may include a bitwise XOR operator and a first bitwise OR operator. The bitwise XOR operator may be configured to perform a bitwise XOR operation on two initial computation results to obtain an XOR operation result. The first bitwise OR operator is configured to perform a bitwise OR operation on the XOR operation result to obtain an OR operation result. As shown in FIG. 2, the initial computation result may have a data size of 32 bits. The first detection module 2411 may include a bitwise XOR operator xor2411 and a first bitwise OR operator bwor2411. According to a first initial computation result and a second initial computation result among N initial computation results, the bitwise XOR operator xor2411 may determine an XOR operation result, which may have a data size of 32 bits. According to the XOR operation result, the first bitwise OR operator bwor2411 may determine an OR operation result, which may have a data size of 1 bit. The first detection module 2412 may include a bitwise XOR operator xor2412 and a first bitwise OR operator bwor2412. According to an (N-1)^{th} initial computation result and an N^{th} initial computation result among the N initial computation results, the bitwise XOR operator xor2412 may determine an XOR operation result, which may have a data size of 32 bits. According to the XOR operation result, the first bitwise OR operator bwor2412 may determine an OR operation result, which may have a data size of 1 bit. It is possible to obtain N OR operation results according to the plurality of first detection modules.

In an embodiment of the present disclosure, the second detection module may include a second bitwise OR operator. The second bitwise OR operator is configured to perform a bitwise OR operation on a plurality of OR operation results to obtain a detection result. The detection result may indicate whether a plurality of vector computation results are identical. As shown in FIG. 2, the second detection module 242 may perform a bitwise OR operation on the N OR operation results to obtain a detection result. The detection result may have a data size of 1 bit. If the detection result is 1, it may indicate that the plurality of initial computation results are identical. If the detection result is 0, it may indicate that the plurality of initial computation results are not identical. It may be understood that the detection unit may detect whether N computation results are identical. It may also be understood that the number of initial computation results obtained after the execution of the instruction to be executed may be less than N. In this case, if the number of initial computation results is K and K is an odd number, a (K-1)^{th} initial computation result may be duplicated to be detected by the detection unit. According to embodiments of the present disclosure, after the plurality of operations of the instruction are executed by the second computing unit, it may be efficiently determined whether the plurality of computation results of the instruction are identical, thereby improving a chip accuracy.

It may be understood that the above description has explained how the detection unit of the present disclosure determines a detection result. The following will describe how the detection unit performs corresponding operations according to the detection result.

In some embodiments, the detection unit may be further configured to, in response to determining that the plurality of initial computation results are identical, write the initial computation result into an idle uniform register. For example, if the detection result corresponding to the first instruction to be executed indicates that the plurality of computation results are identical, it is possible to determine an idle uniform register from the plurality of uniform registers. The idle uniform register may be a first uniform register, and any of the plurality of initial computation results may be written into the first uniform register. Subsequently, the detection unit may update the register mapping data.

In an embodiment of the present disclosure, the detection unit may be further configured to update the register mapping data by: determining the idle uniform register as a uniform register corresponding to a destination register for the instruction to be executed, and update the register mapping data using an identifier of the idle uniform register and an identifier of the destination register. For example, the first uniform register may correspond to the destination register for the first instruction to be executed, and the register mapping data may be updated using the identifier (e.g., register index) of the first uniform register and the identifier of the destination register. According to embodiments of the present disclosure, the computing resources required for uniform computation operations may be reduced, and writing one uniform computation result into the uniform register may reduce the storage resource overhead required for uniform instructions, which may help further reduce the chip area overhead.

Thus, the instruction execution apparatus completes the execution of the first instruction to be executed, and then a second instruction to be executed may be executed. A source register for the second instruction to be executed may not correspond to any of the uniform registers. Accordingly, the method of executing the second instruction to be executed is the same as or similar to the method of executing the first instruction to be executed, which will not be repeated here.

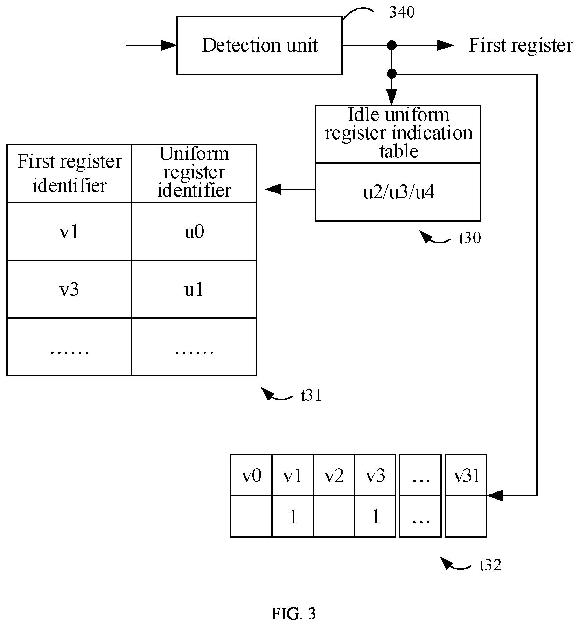

It may be understood that the above description has explained some methods of updating the register mapping data. When a plurality of instructions to be executed are all uniform instructions, the register mapping data may include a plurality of correspondence relationships. In this case, the register mapping data may be implemented as a register mapping table, so as to efficiently determine the uniform register corresponding to the source register. Some methods of updating the register mapping table using the detection unit will be further described below with reference to FIG. 3.

FIG. 3 shows a schematic diagram of updating register mapping data according to an embodiment of the present disclosure.

As shown in FIG. 3, after the second computing unit completes the execution of the second instruction to be executed, a plurality of initial computation results corresponding to the second instruction to be executed may be obtained. According to the plurality of initial computation results corresponding to the second instruction to be executed, a detection unit 340 may determine a detection result. The detection result may indicate that, for example, the plurality of initial computation results are identical.

In an embodiment of the present disclosure, a plurality of idle uniform registers may correspond to idle uniform register indication data, and the idle uniform register indication data may be implemented as an idle uniform register indication table t30. The idle uniform register table t30 may include a plurality of uniform register indexes, and the uniform registers corresponding to the uniform register indexes in the idle uniform register table t30 may be in an idle state. According to the idle uniform register indication table t30, the detection unit 340 may acquire, for example, a uniform register u1, and write any initial computation result corresponding to the second instruction to be executed into the uniform register u1. The destination register for the second instruction to be executed may be a first register v3. The register mapping table t31 may be updated according to the index (v3) of the first register v3 and the index (u1) of the uniform register u1. It may be understood that the uniform register u1 may serve as a second uniform register. As shown in FIG. 3, after the register mapping table t31 is updated, the index (u1) of the uniform register u1 is not contained in the idle uniform register indication table.

As shown in FIG. 3, the register mapping table t31 includes a first register identifier field and a uniform register identifier field. Data in a first row of the register mapping table t31 may be written after the execution of the first instruction to be executed. In the first row of the register mapping table t31, a value of the first register identifier field is v1, and a value of the uniform register identifier field is u0. The first register v1 may be a destination register for the first instruction to be executed, and the uniform register u0 corresponds to the first register v1. Data in a second row of the register mapping table t31 may be written after the execution of the second instruction to be executed. In the second row of the register mapping table t31, a value of the first register identifier field is v3, and a value of the uniform register identifier field is u1. As described above, the uniform register u1 corresponds to the first register v3.

It may be understood that the above description has explained the register mapping table of the present disclosure. When the register mapping table includes multiple rows of data, it may require a large amount of time resource overhead to determine whether the source register for the instruction to be executed corresponds to a uniform register. Thus, when writing the uniform register, it is also possible to update register indication data, which will be described below.

In some embodiments, the register indication data includes respective indication values of a plurality of first registers. Each indication value may be a first indication value or a second indication value. The first indication value may indicate that the first register corresponds to a uniform register, and the second indication value may indicate that the first register does not correspond to any uniform register. For example, the first indication value may be 1, and the second indication value may be 0. As shown in FIG. 3, the register indication data may be implemented as a register indication table t32. The register indication table includes indexes of a plurality of first registers, and the indexes of the plurality of first registers include v0, v1, v2, v3, ..., v31.

In an embodiment of the present disclosure, the detection unit is further configured to update the register indication data by: updating the indication value of a first register corresponding to the destination register for the instruction to be executed in the register indication data to the first indication value. For example, after the initial computation result corresponding to the second instruction to be executed is written into the uniform register u1, the indication value of the first register v3 may be updated to the first indication value. As shown in FIG. 3, after the indication value of the first register v3 is updated to the first indication value, the indication value corresponding to the number v3 is 1, which may indicate that the first register v3 corresponds to a uniform register. In addition, the indication value corresponding to the number v1 is 1, which may indicate that the first register v1 corresponds to a uniform register. According to embodiments of the present disclosure, by providing the register indication data, the time overhead required for determining whether the source register corresponds to a uniform register is reduced with a small storage resource overhead, thereby further improving the chip performance.

It may be understood that the above description has explained the present disclosure by way of example in which the detection result indicates that the plurality of initial computation results are identical. The following will describe the present disclosure by another example, in which the detection result indicates that the plurality of initial computation results are not identical.

In some embodiments, the detection unit is further configured to, in response to determining that the plurality of initial computation results are not identical, write the plurality of initial computation results into at least one first register. For example, after the execution of the second instruction to be executed is completed, a third instruction to be executed may be executed. The source register for the third instruction to be executed may not correspond to any uniform register. Accordingly, the method of executing the third instruction to be executed may be the same as or similar to the method of of executing the first instruction to be executed, which will not be repeated here. However, according to a plurality of initial computation results corresponding to the third instruction to be executed, the detection unit 340 may determine that the plurality of initial computation results are not identical, and may write the plurality of initial computation results into a first register.

It may be understood that the above description has explained the present disclosure by way of example in which the source register does not correspond to any uniform register. The following will describe the present disclosure by another example, in which the source register corresponds to a uniform register.

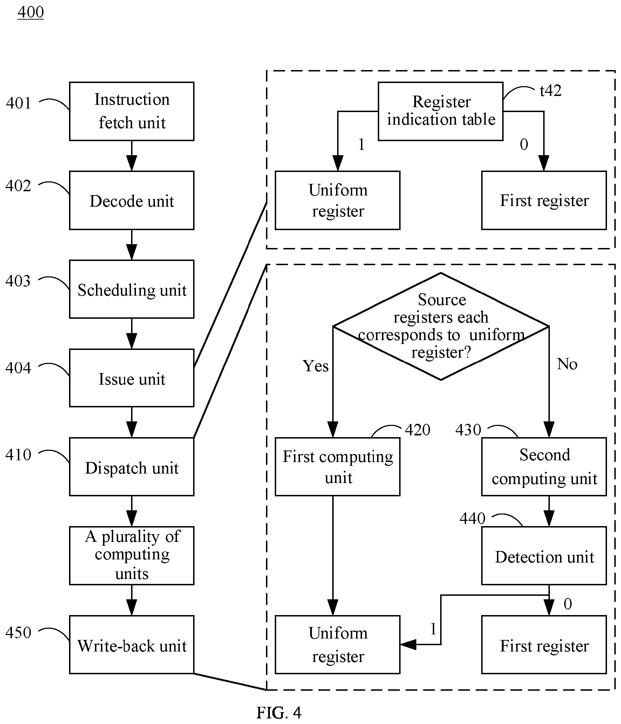

FIG. 4 shows a schematic diagram of an instruction execution apparatus according to an embodiment of the present disclosure.

As shown in FIG. 4, an apparatus 400 may include an instruction fetch unit 401, a decode unit 402, a scheduling unit 403, an issue unit 404, a dispatch unit 410, a plurality of computing units, and a write-back unit 450. The plurality of computing units may include a first computing unit 420 and a second computing unit 430. The apparatus 400 may further include a detection unit 440.

The instruction fetch unit 401 may acquire an initial instruction. The decode unit 402 may decode the initial instruction to obtain a fourth instruction to be executed. The source registers for the fourth instruction to be executed may include a first register v1 and a first register v3. The scheduling unit 403 may schedule hardware resources related to the fourth instruction to be executed so as to execute the instruction to be executed.

In some embodiments, the issue unit may be configured to determine whether the indication value of the first register for the instruction to be executed is the first indication value. For example, the issue unit 404 may determine whether the indication value of the first register for the instruction to be executed is the first indication value by using the above-mentioned register indication table.

In an embodiment of the present disclosure, the issue unit may be configured to, in response to determining that the indication value of the first register for the instruction to be executed is the first indication value, determine a source uniform register corresponding to the first register by using the register mapping data. For example, by using a register indication table t42, it may be determined that the indication value of the first register v1 is 1, indicating that the first register v1 corresponds to a uniform register. It may also be determined that the indication value of the first register v3 is 1, indicating that the first register v3 corresponds to a uniform register. Subsequently, by using the register mapping table t31, it may be determined that the first register v3 corresponds to the uniform register u1, and the first register v1 corresponds to the uniform register u0. It may be understood that the uniform register u1 and the uniform register u0 may serve as source uniform registers for the fourth instruction to be executed.

In an embodiment of the present disclosure, the issue unit may be further configured to send a read request for the source uniform register. For example, it is possible to send a read request for the uniform register u1 and a read request for the uniform register u0. The data to be processed corresponding to the read request may be provided to the computing unit at a stage when the instruction is dispatched by the dispatch unit.

In an embodiment of the present disclosure, the issue unit may be further configured to issue the instruction to be executed to the dispatch unit. For example, the fourth instruction to be executed may be issued to the dispatch unit 410.

In some embodiments, the dispatch unit 410 may be configured to determine whether the plurality of source registers each correspond to a uniform register.

In an embodiment of the present disclosure, the dispatch unit may be further configured to provide the instruction to be executed as a uniform instruction to the first computing unit in response to determining that the plurality of source registers for the instruction to be executed respectively correspond to a plurality of uniform registers. For example, the first register v1 and the first register v3 for the fourth instruction to be executed respectively correspond to the uniform register u0 and the uniform register u1, then the fourth instruction to be executed may be provided to the first computing unit 420. The first computing unit 420 may execute a uniform computation operation of the fourth instruction to be executed to obtain a uniform computation result of the fourth instruction to be executed. The write-back unit 450 or the first computing unit 420 may write the uniform computation result into an idle uniform register. The idle uniform register may be, for example, a uniform register u2.

It may be understood that the above description has explained the present disclosure by way of example in which the plurality of source registers each correspond to a uniform register. However, the present disclosure is not limited thereto. The plurality of source registers for the instruction may include a source register that corresponds to a uniform register and a source register that does not correspond to any uniform register, which will be described below.

As shown in FIG. 4, the instruction fetch unit 401 may acquire another initial instruction. The decode unit 402 may decode the initial instruction to obtain a fifth instruction to be executed. During decoding, a plurality of source registers for the fifth instruction to be executed may be determined. The plurality of source registers may include a first source register and a second source register. The first source register for the fifth instruction to be executed may be the first register v1, and the second source register for the fifth instruction to be executed may be a first register v31. The scheduling unit 403 may schedule hardware resources related to the fifth instruction to be executed, so as to execute the instruction to be executed.

Subsequently, by using the register indication table, the issue unit 404 may determine whether the indication value of the first register for the instruction to be executed is the first indication value. For example, the indication value of the first register v1 is 1, indicating that the first register v1 corresponds to a uniform register. The indication value of the first register v31 is 0, indicating that the first register v31 does not correspond to any uniform register. Thus, the first source register corresponds to a uniform register, and the second source register does not correspond to any uniform register.

In an embodiment of the present disclosure, the issue unit may be configured to, in response to determining that the indication value of the first register for the instruction to be executed is the first indication value, determine a source uniform register corresponding to the first register by using the register mapping data. For example, by using the register indication table t32, it may be determined that the first register v1 corresponds to a uniform register. Then, by using the register mapping table t31, it may be determined that the first register v1 corresponds to the uniform register u0. It may be understood that the uniform register u0 may serve as a source uniform register for the fifth instruction to be executed, and the first source register corresponds to a uniform register.

In an embodiment of the present disclosure, the issue unit may be further configured to send a read request for the source uniform register. For example, it is possible to send a read request for the uniform register u0.

In addition, in an embodiment of the present disclosure, the issue unit may be configured to, in response to determining that the indication value of the first register for the instruction to be executed is the second indication value, send a read request for the first register. For example, by using the register indication table t32, it may be determined that the indication value of the first register v31 is the second indication value, indicating that the first register v31 does not correspond to any uniform register. The issue unit 404 may send a read request for the first register v31. It may be understood that the second source register does not correspond to any uniform register.

In an embodiment of the present disclosure, the issue unit may be further configured to issue the instruction to be executed to the dispatch unit. For example, it is possible to issue the fifth instruction to be executed to the dispatch unit 410.

In some embodiments, the dispatch unit 410 may be configured to determine whether the plurality of source registers each correspond to a uniform register.

In an embodiment of the present disclosure, the dispatch unit may be further configured to, in response to determining that the at least one source register for the instruction to be executed includes a first register that does not correspond to any uniform register, dispatch the instruction to be executed to the second computing unit. For example, the first register v1 for the fifth instruction to be executed corresponds to the uniform register u0, while the first register v31 for the fifth instruction to be executed does not correspond to any uniform register, then the fifth instruction to be executed may be provided to the second computing unit 430.

In an embodiment of the present disclosure, the second computing unit is further configured to execute a plurality of computation operations of the instruction to be executed by: executing the plurality of computation operations of the instruction to be executed according to a plurality of first data to be processed and a plurality of second data to be processed. The plurality of first data to be processed are obtained by replicating data acquired from the uniform register multiple times, and the second data to be processed are acquired from the second source register. For example, assuming that the first register is a vector register, the first register may have a capacity of 512 bits, and may store sixteen 32-bit data. The uniform register may have a capacity of 32 bits, and may store one 32-bit data. Thus, the data in the uniform register u0 may be replicated multiple times to obtain sixteen first data to be processed. The sixteen 32-bit data in the first register v31 may serve as sixteen second data to be processed. The second computing unit 430 may execute the plurality of computation operations of the fifth instruction to be executed to obtain a plurality of initial computation results of the fifth instruction to be executed. According to embodiments of the present disclosure, when the plurality of source registers include both uniform register and non-uniform register, the data in the uniform register may be replicated, so that the computing unit may execute corresponding operations according to a normal execution logic, thereby improving chip stability and chip accuracy.

In some embodiments, the detection unit may determine whether the plurality of initial computation results are identical. In response to determining that the plurality of initial computation results are identical, one of the plurality of initial computation results may be written into an idle uniform register. In response to determining that the plurality of initial computation results are not identical, the plurality of initial computation results may be written into at least one first register. For example, as described above, the detection result may be 1 or 0. If the detection result is 1, one of the initial computation results may be written into an idle uniform register. If the detection result is 0, the plurality of initial computation results may be written into at least one first register. For another example, in a case that the plurality of initial computation results of the fifth instruction to be executed are not identical, the detection unit 440 may write the plurality of computation results into an idle first register. Alternatively, the detection unit 440 may provide a control signal so that the write-back unit 450 writes the plurality of computation results into an idle first register.

It may be understood that the above description has further explained the overall apparatus of the present disclosure with reference to FIG. 4. The following will further describe the first computing unit of the present disclosure.

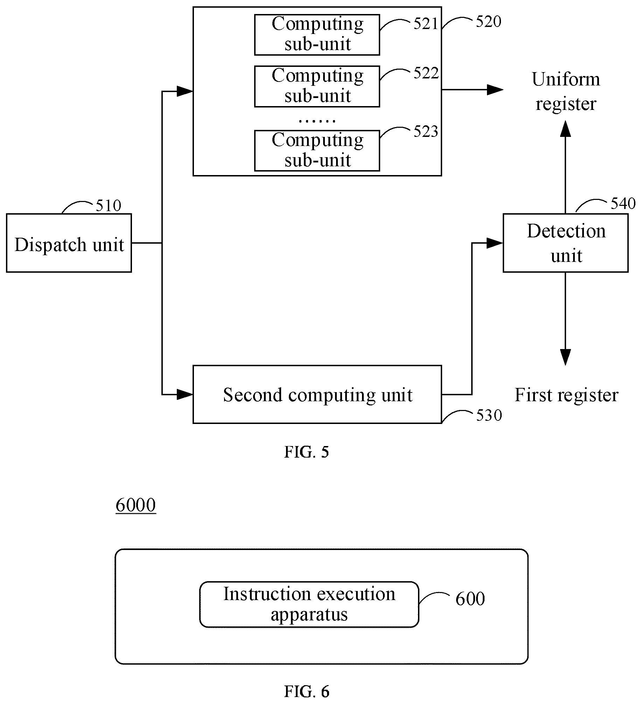

FIG. 5 shows a schematic diagram of a plurality of computing units according to an embodiment of the present disclosure.

As shown in FIG. 5, a dispatch unit 510 may dispatch an instruction to be executed to a first computing unit 520 or a second computing unit 530. For example, the dispatch unit 510 may dispatch a fourth instruction to be executed to the first computing unit 520 in a clock cycle. In that clock cycle or a next clock cycle after that clock cycle, the dispatch unit 520 may further dispatch a fifth instruction to be executed to the second computing unit 530. Thus, the first computing unit 510 and the second computing unit 520 may be in a busy state almost simultaneously, thereby improving a utilization rate of computing resources.

In some embodiments, the first computing unit may include a plurality of computing sub-units. As shown in FIG. 5, the first computing unit 510 may include M computing sub-units, and the M computing sub-units include a computing sub-unit 511, a computing sub-unit 512, ..., a computing sub-unit 513, where M is an integer greater than 1. For another example, the first computing unit may be a multiply accumulate (MAC) array, and the computing sub-unit may be a sub-array of the multiply accumulate array. It may be understood that the first computing unit may also be other types of computing units, which is not limited in the present disclosure.

In some embodiments, the uniform computation operation may include a plurality of uniform computation sub-operations. The plurality of computing sub-units are configured to execute the plurality of uniform computation sub-operations to obtain a uniform computation result. For example, the uniform computation operation may be multiplying two 32-bit floating-point numbers. The plurality of uniform computation sub-operations in the uniform computation operation include a first uniform computation sub-operation, a second uniform computation sub-operation, and a third uniform computation sub-operation. The first uniform computation sub-operation may include multiplying high-order components of the two 32-bit floating-point numbers to obtain a high-order computation result. The second uniform computation sub-operation may include multiplying low-order components of the two 32-bit floating-point numbers to obtain a low-order computation result. The third uniform computation sub-operation may include determining a uniform computation result according to the high-order computation result and the low-order computation result. It may be understood that the uniform computation operation may be other operations, which is not limited in the present disclosure. The high-order component may refer to bits 32 to 17 of the floating-point number, and the low-order component may refer to bits 16 to 1 of the floating-point number.

In an embodiment of the present disclosure, the plurality of computing sub-units may serve as different stages of a pipeline. The computing sub-unit 511 may serve as a first-stage computing sub-unit of the pipeline, the computing sub-unit 512 may serve as a second-stage computing sub-unit of the pipeline, and the computing sub-unit 513 may serve as an M^{th}-stage computing sub-unit of the pipeline. It may be understood that for different computation operations, different stages of computing sub-units may execute a plurality of computation sub-operations in series, or may execute at least two computation sub-operations in parallel.

In an embodiment of the present disclosure, the plurality of computing sub-units may include a target computing sub-unit, which is configured to: execute a target uniform computation sub-operation among the plurality of uniform computation sub-operations to obtain an intermediate computation result; and in response to determining that a subsequent computing sub-unit corresponding to a subsequent uniform computation sub-operation to be executed after the target computation sub-operation is in an idle state, provide the intermediate computation result to the subsequent computing sub-unit. For example, for the uniform computation sub-operations of multiplying two 32-bit floating-point numbers, the first uniform computation sub-operation, the second uniform computation sub-operation and the third uniform computation sub-operation respectively correspond to the computing sub-unit 511, the computing sub-unit 512 and the computing sub-unit 513. The computing sub-unit 511 may serve as the target computing sub-unit to execute the first uniform computation sub-operation to obtain a high-order computation result as an intermediate computation result. The computing sub-unit 512 may also serve as the target computing sub-unit to execute the second uniform computation sub-operation to obtain a low-order computation result as an intermediate computation result. When the computing sub-unit 513 is idle, the high-order computation result and the low-order computation result may be provided to the computing sub-unit 513. It may be understood that for the uniform computation operation, the computing sub-unit 513 may serve as the subsequent computing sub-unit.

In an embodiment of the present disclosure, the subsequent computing sub-unit among the plurality of operators is configured to execute the subsequent uniform computation sub-operation according to the intermediate computation result to obtain a subsequent computation result. For example, the computing sub-unit 513 may execute the third uniform computation sub-operation to obtain a uniform computation result. The uniform computation result may serve as a subsequent computation result after the high-order computation result or the low-order computation result.

In an embodiment of the present disclosure, the target computing sub-unit is further configured to execute a computation sub-operation of a subsequent computation operation to be executed after the uniform computation operation. For example, after completing the execution of the first uniform computation sub-operation, the computing sub-unit 511 may enter an idle state and may execute a computation sub-operation of the subsequent computation operation. As a result, pipeline bubbles may be reduced, and the instruction execution efficiency may be improved. While the computing sub-unit 513 is executing a computation sub-operation, the computing sub-unit 511 may execute a computation sub-operation of another instruction, thereby improving execution parallelism, accelerating instruction issue and dispatch efficiency, and achieving a higher instruction execution efficiency.

It may be understood that the above description has explained the present disclosure by way of example in which the dispatch unit processes a uniform instruction and a non-uniform instruction sequentially. However, the present disclosure is not limited thereto, and the dispatch unit may also process a plurality of uniform instructions sequentially.

In an embodiment of the present disclosure, in a case of a plurality of instructions to be executed, the dispatch unit may be further configured to dispatch the uniform instruction to the first computing unit according to a target clock cycle. The target clock cycle may be a clock cycle in which it is determined that the at least one source register for the instruction to be executed corresponds to at least one uniform register. For example, in order to determine whether one or more source registers are all uniform registers, the dispatch unit may query the register indication table, which may take one or more clock cycles. The clock cycle in which it is determined that the one or more source registers are all uniform registers may be the target clock cycle. Based on the target clock cycle, the instruction to be executed may be dispatched to the first computing unit without delay.

In an embodiment of the present disclosure, a plurality of uniform instructions received by the first computing unit may correspond to different delay parameters. For example, the delay parameter may correspond to one or more clock cycles. In a first clock cycle, the first computing unit may receive a sixth instruction to be executed. In a second clock cycle, the first computing unit may receive a seventh instruction to be executed. The delay parameter of the seventh instruction to be executed may cause a preceding computing sub-unit (such as the computing sub-unit 511 or the computing sub-unit 512) of the pipeline of the first computing unit to execute a computation sub-operation of the seventh instruction to be executed after completing the execution of a computation sub-operation of the sixth instruction to be executed.

It may be understood that the above description has explained the apparatus of the present disclosure. The following will describe a device including the apparatus.

FIG. 6 shows a schematic block diagram of an electronic device according to an embodiment of the present disclosure.

As shown in FIG. 6, a device 6000 may include an instruction execution apparatus 600. The apparatus 600 may be the apparatus 100 or 400 described above.

It may be understood that the above description has explained the device of the present disclosure. The following will describe a method of the present disclosure.

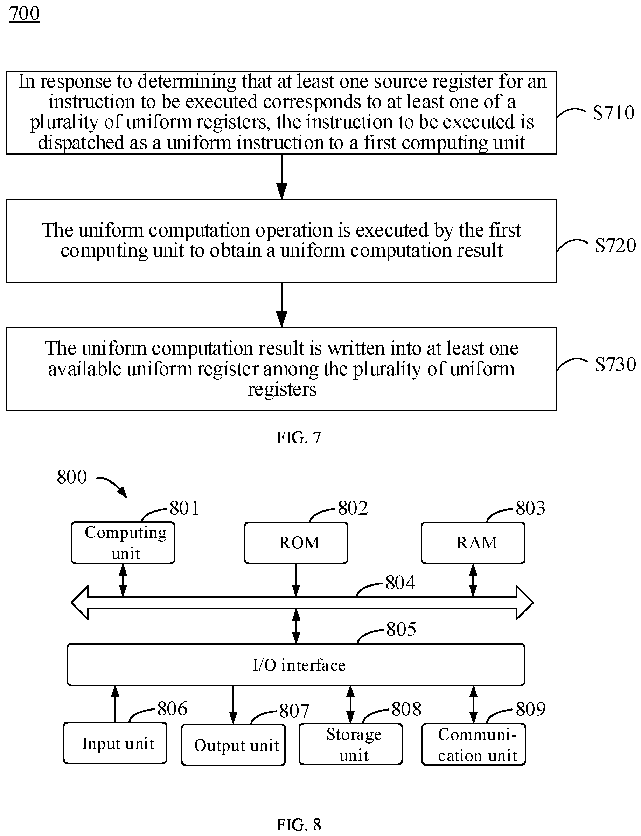

FIG. 7 shows a flowchart of an instruction execution method according to an embodiment of the present disclosure.

As shown in FIG. 7, a method 700 may include operation S710 to operation S730.

In operation S710, in response to determining that at least one source register for an instruction to be executed corresponds to at least one of a plurality of uniform registers, the instruction to be executed is dispatched as a uniform instruction to a first computing unit. The uniform instruction includes a plurality of uniform computation operations. Operation S710 may be performed by the dispatch unit 110 described above.

In operation S720, the uniform computation operation is executed by the first computing unit to obtain a uniform computation result. The first computing unit in operation S720 may be the first computing unit 120 described above.

In operation S730, the uniform computation result is written into at least one available uniform register among the plurality of uniform registers.

It may be understood that the method 700 may be performed by the apparatus 100 or 400 described above.

In some embodiments, the method 700 further includes: in response to determining that the at least one source register for the instruction to be executed includes a first register that does not correspond to any uniform register, dispatching the instruction to be executed to a second computing unit; and executing a plurality of computation operations of the instruction to be executed using the second computing unit to obtain a plurality of initial computation results.

In some embodiments, the method 700 further includes: in response to determining that the plurality of initial computation results are identical, writing the initial computation result into an idle uniform register.

In some embodiments, the method 700 further includes: in response to determining that the plurality of initial computation results are not identical, writing the plurality of initial computation results into at least one first register.

In some embodiments, writing the initial computation result into an idle uniform register includes: updating at least one of register indication data and register mapping data. The register indication data includes respective indication values of a plurality of first registers, and the indication value may be a first indication value or a second indication value. The first indication value indicates that the first register corresponds to a uniform register, and the second indication value indicates that the first register does not correspond to any uniform register. The register mapping data indicates the first register and the uniform register corresponding to the first register.

In some embodiments, updating at least one of the register indication data and the register mapping data includes: updating the indication value of the first register corresponding to a destination register for the instruction to be executed in the register indication data to the first indication value, determining the idle uniform register as a uniform register corresponding to the destination register for the instruction to be executed, and updating the register mapping data using an identifier of the idle uniform register and an identifier of the destination register.

In some embodiments, the method 700 further includes: in response to determining that the indication value of the first register for the instruction to be executed is the first indication value, determining a source uniform register corresponding to the first register by using the register mapping data; sending a read request for the source uniform register; and issuing the instruction to be executed to the dispatch unit.

In some embodiments, the method 700 further includes: in response to determining that a plurality of source registers for the instruction to be executed respectively correspond to a plurality of uniform registers, providing the instruction to be executed as a uniform instruction to the first computing unit.

In some embodiments, the plurality of source registers for the instruction to be executed include a first source register and a second source register, the first source register corresponds to a uniform register, and the second source register does not correspond to any uniform register. Executing the plurality of computation operations of the instruction to be executed using the second computing unit includes: executing the plurality of computation operations of the instruction to be executed according to a plurality of first data to be processed and a plurality of second data to be processed. The plurality of first data to be processed are obtained by replicating data acquired from the uniform register multiple times, and the second data to be processed are acquired from the second source register.

In some embodiments, in a case of a plurality of instructions to be executed, the method 700 further includes: dispatching the uniform instruction to the first computing unit according to a target clock cycle, where the target clock cycle is a clock cycle in which it is determined that the at least one source register for the instruction to be executed corresponds to at least one uniform register.

In some embodiments, the first computing unit includes a plurality of computing sub-units, and the uniform computation operation include a plurality of uniform computation sub-operations. Executing the uniform computation operation using the first computing unit to obtain a uniform computation result includes: executing the plurality of uniform computation sub-operations using the plurality of computing sub-units to obtain the uniform computation result.

In some embodiments, executing the plurality of uniform computation sub-operations using the plurality of computing sub-units to obtain a uniform computation result includes: executing a target uniform computation sub-operation among the plurality of uniform computation sub-operations using a target computing sub-unit among the plurality of computing sub-units to obtain an intermediate computation result; in response to determining that a subsequent computing sub-unit corresponding to a subsequent uniform computation sub-operation to be executed after the target computation sub-operation is in an idle state, providing the intermediate computation result to the subsequent computing sub-unit; and executing the subsequent uniform computation sub-operation using the subsequent computing sub-unit according to the intermediate computation result to obtain a subsequent computation result.

In some embodiments, executing the plurality of uniform computation sub-operations using the plurality of computing sub-units to obtain a uniform computation result includes: executing a computation sub-operation of a subsequent computation operation to be executed after the uniform computation operation by using the target computing sub-unit.

In some embodiments, the method 700 further includes: performing a bitwise XOR operation on two initial computation results to obtain an XOR operation result; performing a bitwise OR operation on the XOR operation result to obtain an OR operation result; and performing a bitwise OR operation on a plurality of OR operation results to obtain a detection result. The detection result indicates whether the plurality of initial computation results are identical.

In some embodiments, the method 700 further includes: updating the register mapping data using at least one available uniform register written with the uniform computation result and at least one destination register for the instruction to be executed.

In the technical solutions of the present disclosure, the collection, storage, use, processing, transmission, provision, disclosure and other processing of user personal information involved all comply with the provisions of relevant laws and regulations, and do not violate public order and good customs.

According to embodiments of the present disclosure, the present disclosure further provides an electronic device, a readable storage medium, and a computer program product.

FIG. 8 shows a schematic block diagram of an exemplary electronic device 800 suitable for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and processes described above, such as the instruction execution method. For example, in some embodiments, the instruction execution method may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the instruction execution method described above. Alternatively, in other embodiments, the computing unit 801 may be used to perform the instruction execution method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the method of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. An instruction execution method (700), comprising:
in response to determining that at least one source register for an instruction to be executed corresponds to at least one of a plurality of uniform registers, dispatching (S710) the instruction to be executed as a uniform instruction to a first computing unit (120, 420, 520), wherein the uniform instruction comprises a plurality of uniform computation operations; and
executing (S720) the uniform computation operations using the first computing unit (120, 420, 520) to obtain a uniform computation result, wherein the uniform computation result is written (S730) into at least one available uniform register among the plurality of uniform registers.

2. The method (700) according to claim 1, further comprising:
in response to determining that the at least one source register for the instruction to be executed comprises a first register that does not correspond to any of the uniform registers, dispatching the instruction to be executed to a second computing unit (430, 530); and
executing a plurality of computation operations of the instruction to be executed using the second computing unit (430, 530) to obtain a plurality of initial computation results.

3. The method (700) according to claim 2, further comprising:
in response to determining that the plurality of initial computation results are identical, writing the initial computation result into an idle uniform register.

4. The method (700) according to claim 2, further comprising:
in response to determining that the plurality of initial computation results are not identical, writing the plurality of initial computation results into at least one first register.

5. The method (700) according to claim 3, wherein the writing the initial computation result into an idle uniform register comprises:
updating at least one of register indication data and register mapping data, wherein the register indication data comprises respective indication values for a plurality of first registers, each indication value is a first indication value indicating that the first register corresponds to one of the uniform registers or a second indication value indicating that the first register does not correspond to any of the uniform registers, and the register mapping data indicates the first register and the uniform register corresponding to the first register.

6. The method (700) according to claim 5, wherein the updating at least one of register indication data and register mapping data comprises:
updating the indication value of a first register corresponding to a destination register for the instruction to be executed in the register indication data to the first indication value; and
determining the idle uniform register as a uniform register corresponding to the destination register for the instruction to be executed, and updating the register mapping data using an identifier of the idle uniform register and an identifier of the destination register.

7. The method (700) according to claim 5, further comprising:
in response to determining that the indication value of the first register for the instruction to be executed is the first indication value, determining a source uniform register corresponding to the first register by using the register mapping data;
sending a read request for the source uniform register; and
issuing the instruction to be executed to the dispatch unit (110, 410, 510).

8. The method (700) according to claim 1, further comprising:
in response to determining that a plurality of source registers for the instruction to be executed respectively correspond to a plurality of uniform registers, providing the instruction to be executed as a uniform instruction to the first computing unit (120, 420, 520).

9. The method (700) according to claim 2, wherein the plurality of source registers for the instruction to be executed comprise a first source register and a second source register, the first source register corresponds to a uniform register, and the second source register does not correspond to any of the uniform registers; and
wherein the executing a plurality of computation operations of the instruction to be executed using the second computing unit (430, 530) comprises:
executing the plurality of computation operations of the instruction to be executed according to a plurality of first data to be processed and a plurality of second data to be processed, wherein the plurality of first data to be processed are obtained by replicating data acquired from the uniform register multiple times, and the second data to be processed are acquired from the second source register.

10. The method (700) according to claim 1, further comprising: in a case of a plurality of instructions to be executed,
dispatching the uniform instruction to the first computing unit (120, 420, 520) according to a target clock cycle, wherein the target clock cycle is a clock cycle in which it is determined that at least one source register for the instruction to be executed corresponds to at least one of the uniform registers.

11. The method (700) according to claim 1, wherein the first computing unit (120, 420, 520) comprises a plurality of computing sub-units (521, 522, 523), the uniform computation operation comprises a plurality of uniform computation sub-operations; and
wherein the executing (S720) the uniform computation operations using the first computing unit (120, 420, 520) to obtain a uniform computation result comprises:
executing the plurality of uniform computation sub-operations using the plurality of computing sub-units (521, 522, 523) to obtain the uniform computation result,
wherein the executing the plurality of uniform computation sub-operations using the plurality of computing sub-units (521, 522, 523) to obtain the uniform computation result comprises:
executing a target uniform computation sub-operation among the plurality of uniform computation sub-operations using a target computing sub-unit among the plurality of computing sub-units (521, 522, 523) to obtain an intermediate computation result;
in response to determining that a subsequent computing sub-unit corresponding to a subsequent uniform computation sub-operation following the target computation sub-operation is in an idle state, providing the intermediate computation result to the subsequent computing sub-unit; and
executing the subsequent uniform computation sub-operation using the subsequent computing sub-unit according to the intermediate computation result to obtain a subsequent computation result,
wherein the executing the plurality of uniform computation sub-operations using the plurality of computing sub-units (521, 522, 523) to obtain the uniform computation result comprises:
executing a computation sub-operation of a subsequent computation operation following the uniform computation operation using the target computing sub-unit.

12. The method (700) according to claim 3, further comprising:
performing a bitwise XOR operation on two of the initial computation results to obtain an XOR operation result;
performing a bitwise OR operation on the XOR operation result to obtain an OR operation result; and
performing a bitwise OR operation on a plurality of OR operation results to obtain a detection result, wherein the detection result indicates whether the plurality of initial computation results are identical,
and optionally the method (700) further comprises:
updating the register mapping data using the at least one available uniform register written with the uniform computation result and at least one destination register for the instruction to be executed.

13. An electronic device (800), comprising:
at least one processor; and
a memory communicatively connected to the at least one processor, wherein the memory stores instructions executable by the at least one processor, and the instructions are configured to, when executed by the at least one processor, cause the at least one processor to implement the method of any one of claims 1 to 12.

14. A non-transitory computer-readable storage medium having computer instructions therein, wherein the computer instructions are configured to cause a computer to implement the method of any one of claims 1 to 12.

15. A computer program product containing a computer program, wherein the computer program is configured to, when executed by a processor, cause the processor to implement the method of any one of claims 1 to 12.
